# EUROPEAN PATENT SPECIFICATION

(11) **EP 2 135 909 B1**
(45) Date of publication and mention of the grant of the patent: **10.01.2018**
(21) Application number: 09162186.2
(22) Date of filing: 08.06.2009
(51) Int. Cl.: C09J 155/02, C09J 155/04, C09J 163/00, C08L 51/04, C08L 55/02, C09J 151/04

(54) **Next generation, highly toughened two part structural epoxy adhesive compositions**
Schlagzähmodifizierte strukturelle Zweikomponenten-Epoxidharzzusammensetzungen der nächsten Generation
Compositions deux-composants d'adhésifs structurels d'époxide fortement renforcés de la nouvelle génération

(30) Priority: 12.06.2008 US 60850 P
(43) Date of publication of application: 23.12.2009
(73) Proprietor: Henkel IP & Holding GmbH, 40589 Düsseldorf (DE)
(72) Inventor: Malone, Richard, Parker, CO Colorado 80138 (US)
(74) Representative: Henkel IP Department

(56) References cited:
- EP-A- 0 354 498
- WO-A-2008/045270
- US-A- 5 290 857
- US-A- 6 111 015
- US-A1- 2003 187 154

## Description

This invention relates to two part epoxy compositions useful as adhesives and more particularly to two part epoxy adhesive compositions having improved toughness.

Structural adhesives are useful to bond together materials subjected to stress together, for example metal to metal, metal to plastic, plastic to plastic, etc. Use of structural adhesives can eliminate or reduce the need for, and cost of, mechanical joining methods, such as fasteners, rivets or welding. Structural adhesives can distribute load stresses over large areas of the bonded structure rather than concentrating stresses at a few mechanically fastened joints in that structure. Structural adhesives also seal the bonded area, lessening penetration of water, dirt or noise through the bonded structure.

Structural joints can fail in an adhesive failure mode, a cohesive failure mode or a combined adhesive/cohesive failure mode. Adhesive failure is failure of the adhesive bond at the interface of the adhesive and substrate, leaving the substrate free of adhesive. Cohesive failure is failure within the adhesive, leaving adhesive attached to the substrate. It is also possible to have a mixed failure mode with elements of both adhesive and cohesive failure. In structural applications a cohesive failure mode is preferred as this failure mode predictably provides the joint with the maximum possible strength.

Toughness generally is the ability of a material to absorb energy and undergo large permanent set without rupture. Certain adhesive systems possess sufficient strength but lack sufficient toughness for some structural applications. For example, epoxy resins form a versatile glassy network when cured having good strength, excellent resistance to corrosion and solvents, good adhesion, reasonably high glass transition temperatures (T_{g}) and adequate electrical properties. Unfortunately, the poor toughness of some cured epoxy resin compositions allows them to fracture under stress, limiting their usefulness in some structural applications. However, improvement of epoxy-based composition toughness may result in a loss of strength for that composition. Further, many epoxy-based compositions, including those modified for increased toughness, have a less desirable adhesive failure mode.

There is a need for two part adhesive compositions comprising an epoxy resin component that surpass the present levels of strength and toughness. It would also be desirable to develop two part adhesive compositions comprising an epoxy resin component that typically provide an improved failure mode in use.

The present disclosure broadly speaking provides two part curable compositions comprising a mixture of a first resin part, a second curing agent part, a combination of different types of particulate impact modifiers and a non-particle toughener. The composition can optionally contain other materials, for example, one or more of an anti-oxidant, a diluent, a chelate-modified epoxy resin, an auxiliary impact modifier/toughening agent, a filler, a rheology modifier, an adhesion promoter or other adjuvants. The particulate impact modifiers, non-particle toughener and optional components can be formulated into either or both of the resin part or the curing agent part as desirable.

The two parts are stored separately and mixed homogeneously in predefined proportions to form the curable composition shortly before use. Curing of the composition starts when the parts are mixed and proceeds at room temperature so that the mixed composition has a relatively short working life and essentially no storage stability.

In advantageous embodiments the mixed and cured composition provides a strong bond having an improved cohesive or adhesive/cohesive failure mode while simultaneously exhibiting improved impact toughness and/or impact resistance as compared to conventional two part epoxy compositions.

The disclosed materials include any and all isomers and stereoisomers. In general, the disclosed compositions may be alternately formulated to comprise, consist of, or consist essentially of, any appropriate components, materials, ingredients, adjuvants or species herein disclosed. The disclosed compositions may additionally, or alternatively, be formulated so as to be devoid, or substantially free, of any components, materials, ingredients, adjuvants or species used in the prior art compositions or that are otherwise not necessary to the achievement of the disclosed function.

When the word "about" is used herein it is meant that the amount or condition it modifies can vary some beyond the stated amount so long as the function of the disclosure is realized. The skilled artisan understands that there is seldom time to fully explore the extent of any area and expects that the disclosed result might extend, at least somewhat, beyond one or more of the disclosed limits. Later, having the benefit of this disclosure and understanding the concept and embodiments disclosed herein, a person of ordinary skill can, without inventive effort, explore beyond the disclosed limits and, when embodiments are found to be without any unexpected characteristics, those embodiments are within the meaning of the term about as used herein.

The disclosed two part curable composition comprises a mixture of an epoxy resin containing part, a curing agent containing part, a combination of different types of particulate impact modifiers and a non-particle toughener. The composition can optionally contain other materials, for example, one or more of an anti-oxidant, a diluent, a chelate-modified epoxy resin, an auxiliary impact modifier/toughening agent, a filler, a rheology modifier, an adhesion promoter or other adjuvants. The particulate impact modifiers, non-particle toughener and optional components can be formulated into either or both of the resin part or the curing agent part as desirable.

The curing agent containing part can be at least one aliphatic amine capable of curing the resin part at about room temperature in a short time to provide substantial physical properties. In one embodiment the curing agent part comprises at least one aliphatic amine capable of curing the resin part at about room temperature and a reactive polyamide resin.

In one embodiment the curable composition comprises a resin part, a separate curing agent part, at least two different types of core-shell particles and an auxiliary impact modifier/toughening agent. The resin part can comprise epoxy resin and optionally one or more components including an epoxide or other reactive group such as auxiliary impact modifiers/toughening agents and reactive diluents; and non-reactive materials such as core-shell particles, non-reactive diluents, adhesion promoters, fillers and other adjuvants. The curing agent part can comprise hardener compounds and optionally one or more components including amino groups such as auxiliary impact modifiers/toughening agents; and non-reactive materials such as core-shell particles, non-reactive diluents, adhesion promoters, fillers and other adjuvants. Composition of the resin part and the curing agent part will be influenced by factors such as intended use of the mixed curable composition; intended mixing method; intended application method; and desired viscosity of the resin part and curing agent part.

In one embodiment the resin part is a homogeneous mixture comprising at least one aromatic epoxy resin, a combination of at least two different types of core-shell particles and an epoxide containing auxiliary toughener.

In one embodiment the resin part is a homogeneous mixture comprising at least one aromatic epoxy resin; a first type of core-shell rubber particles; a second type of acrylate or methacrylate based core-shell particles; and an epoxide containing auxiliary impact modifier/toughening agent. In one advantageous variation the auxiliary impact modifier/toughening agent comprises an epoxy-based prepolymer obtained by reacting one or more epoxy resins with one or more amine-terminated polyethers.

In one embodiment the resin part is a homogeneous mixture comprising at least one aromatic epoxy resin; a first type of core-shell rubber particles; a second type of acrylate or methacrylate based core-shell particles; a third type of methacrylate-butadiene-styrene core-shell particles; and an epoxide containing auxiliary impact modifier/toughening agent. In one advantageous variation the auxiliary impact modifier/toughening agent comprises an epoxy-based prepolymer obtained by reacting one or more epoxy resins with one or more amine-terminated polyethers.

The two parts are stored separately and mixed in predefined proportions to form an adhesive composition shortly before use. As used herein a two part composition begins to react upon mixing of the resin part and the curing agent part and the mixture can gel at about room temperature and in a short time, for example about 20 minutes to about 240 minutes and subsequently cure, for example, in about 24 hours to provide substantial physical properties. Because the two part composition begins to gel and cure at room temperature upon mixing of the resin part and the curing agent part, the mixture will have substantially no storage life beyond the cure time. Room temperature typically falls within the range of about 20°C (68 °F) to about 25°C (77 °F). A two part composition does not typically include a latent hardener as the main curing component. A two part composition does not require heat to initiate a cure reaction, although heat can be optionally used to accelerate an existing cure reaction or to "push" an existing cure reaction toward completion. A two part composition is distinguished from, and does not encompass, a single part composition. A single part composition is a mixture of a resin part and a latent hardener. The single part composition is stable, e.g. does not gel or cure, at about room temperature for long periods of time and requires elevated temperatures to activate the latent curing agent and thereby initiate a reaction between the resin part and the hardener. The latent hardener of a single part composition can not initiate a reaction useful to cure the single part composition at about room temperature in a short time to provide substantial physical properties. The two part composition can be used in applications where one part compositions can not be used because heated curing is not possible or desirable.

In general, a large number of polyepoxides having at least about two epoxy groups per molecule are suitable for use in the resin part. The polyepoxides may be saturated, unsaturated, cyclic or acyclic, aliphatic, alicyclic, aromatic or heterocyclic polyepoxide compounds. Examples of suitable polyepoxides include the polyglycidyl ethers, which are prepared by reaction of epichlorohydrin or epibromohydrin with a polyphenol in the presence of alkali. Suitable polyphenols therefore are, for example, resorcinol, pyrocatechol, hydroquinone, bisphenol A (bis(4-hydroxyphenyl)-2,2-propane), bisphenol F (bis(4-hydroxyphenyl)methane), bis(4-hydroxyphenyl)-1,1-isobutane, 4,4'-dihydroxybenzophenone, bis(4-hydroxyphenyl)-1,1-ethane, and 1,5-hydroxynaphthalene. Other suitable polyphenols as the basis for the polyglycidyl ethers are the known condensation products of phenol and formaldehyde or acetaldehyde of the novolac resin-type. Other polyepoxides that are in principle suitable are the polyglycidyl ethers of polyalcohols or diamines. Such polyglycidyl ethers are derived from polyalcohols, such as ethylene glycol, diethylene glycol, triethylene glycol, 1,2-propylene glycol, 1,4-butylene glycol, triethylene glycol, 1,5-pentanediol, 1,6-hexanediol or trimethylolpropane. Other polyepoxides are polyglycidyl esters of polycarboxylic acids, for example, reaction products of glycidol or epichlorohydrin with aliphatic or aromatic polycarboxylic acids, such as oxalic acid, succinic acid, glutaric acid, terephthalic acid or a dimeric fatty acid. Other epoxides are derived from the epoxida-tion products of olefinically-unsaturated cycloaliphatic compounds or from natural oils and fats.

One suitable liquid epoxy resin is derived from reaction of bisphenol A or bisphenol F and epichlorohydrin. These epoxy resins are liquid at room temperature and generally have epoxy equivalent weights of from about 150 to about 480. The epoxy resins that are solid at room temperature may also or alternatively be used and are likewise obtainable from polyphenols and epichlorohydrin; particular preference is given to those based on bisphenol A or bisphenol F having a melting point of from 45°C to 130°C, preferably from 50°C to 80°C. They differ from the liquid epoxy resins substantially by the higher molecular weight thereof, as a result of which they become solid at room temperature. The solid epoxy resins generally have an epoxy equivalent weight of ≥ 400. The epoxy resins useful herein may be in the solid, semi-solid or liquid state. Liquid epoxy resins can be used to provide liquid, two part compositions, which are advantageous for ease of use. Typically, the mixed, two part composition may contain from about 20% to about 75% by weight of the mixed, two part composition, advantageously about 30% to about 70% by weight of the mixed, two part composition and desirably about 45% to about 65% by weight of the mixed, two part composition of the epoxy resin.

The curing agent part can comprise hardener compounds that initiate a cure reaction with the resin part at about room temperature. The hardener compound may function in a catalytic manner or, in preferred embodiments, participate directly in the curing process by reaction with one or more components of the resin containing part. Hardener compounds useful to cure the resin part at about room temperature include one or more of aliphatic amines, modified cycloaliphatic amines, polyetheramines, polyamides, amidoamines, aromatic amines, and/or mixtures thereof. In principle, catalytically active tertiary acryl- or alkyl-amines, such as benzyldimethylamine, tris(dimethylamino)phenol, piperidine or piperidine derivatives, may also be used. Various imidazole derivatives, preferably solid imidazole derivatives, may also be used as catalytically-active accelerators. Examples which may be mentioned are 2-ethyl-2-methylimidazole, N-butylimidazole, benzimidazole and N-C, to C₁₂-alkylimidazoles or N-arylimidazoles.

The amount of hardener compound utilized will depend upon a number of factors, including whether the curing agent acts as a catalyst or participates directly in crosslinking of the composition, the concentration of epoxy groups and other reactive groups in the composition, the desired curing rate, temperature and so forth. Typically, the mixed, two part composition comprises about 3 weight percent to about 60 weight percent of the hardener compound.

It has been found convenient to combine the resin part and the curing agent part at a specific volumetric ratio, for example 4 ml of resin part for each 1 ml of curing agent part. Other convenient ratios, for example 2 ml of resin part for each 1 ml of curing agent part or 1 ml of resin part for each 1 ml of curing agent part can also be used. The curing agent part can comprise fillers, diluents or other components to obtain a volumetric portion of curing agent containing a desirable amount of hardener compound.

The composition can comprise a combination of different types of particles having a core-shell structure, e.g. a particle having a core comprised of a first material surrounded by a shell comprised of a second material, wherein the first and second materials are typically different. The core-shell particle can have a core comprised of a polymeric material having elastomeric or rubbery properties (i.e., a glass transition temperature less than about 0°C, e.g., advantageously less than about -30°C) surrounded by a shell comprised of a non-elastomeric polymeric material (i.e., a thermoplastic or thermoset/crosslinked polymer having a glass transition temperature greater than ambient temperatures, e.g., greater than about 50°C).

The core can be formed predominantly from feed stocks of polybutadiene, polyacrylate, polystyrene, polybutadiene/styrene mixture, polybutadiene/acrylonitrile mixture, polyols and/or polysiloxanes or any other monomers that give a lower glass transition temperature. For example, the core can be comprised of a diene homopolymer or copolymer (for example, a homopolymer of butadiene or isoprene; a copolymer of butadiene or isoprene with one or more ethylenically unsaturated monomers such as vinyl aromatic monomers, (meth)acrylonitrile, (meth)acrylates, or the like) or an acrylate or methacrylate polymer. Other rubbery polymers may also be suitably be used for the core, including polybutylacrylate or polysiloxane elastomer (e.g., polydimethylsiloxane, particularly crosslinked polydimethylsiloxane).

The shell can be formed predominantly from feed stocks of polymethylmethacrylate, polystyrene or polyvinyl chloride or any other monomers that give a higher glass transition temperature. For example, the shell can be comprised of a polymer or copolymer of one or more monomers such as an acrylate, (meth)acrylate (e.g., methyl methacrylate), vinyl aromatic monomer (e.g., styrene), vinyl cyanide (e.g., acrylonitrile), unsaturated acids and anhydrides (e.g., acrylic acid), (meth)acrylamide, and the like having a suitably high glass transition temperature.

The core-shell particle may be comprised of more than two layers (e.g., a central core of one material may be surrounded by a second core of a different material or the core may be surrounded by two shells of different composition or the particle may have a soft core, hard shell, soft shell, hard shell structure. The particles can comprise a core and at least two concentric shells having different chemical compositions and/or properties. Either the core or the shell or both the core and the shell may be crosslinked (e.g., ionically or covalently). The shell may be grafted onto the core. The polymer comprising the shell may bear one or more different types of functional groups (e.g., epoxy groups) that are capable of interacting with other components of the compositions of the present invention.

Some of the core-shell particles structures available from Rohm and Haas are believed to have a core made from cross linked poly(butadiene/styrene) and a polymethylmethacrylate shell. Some of the core-shell particles structures available from Nippon Zeon are believed to have a core comprising an acrylate or methacrylate polymer having a glass transition of about -30°C or lower and a shell comprising an acrylate polymer or a methacrylate polymer having a glass transition temperature of about 70°C or higher.

The outer surface of the core-shell particle may be modified by reaction with a coupling agent, oxidizing agent or the like so as to enhance the ability to disperse the particle in the component part (e.g., reduce agglomeration of the particles, reduce the tendency of the particles to settle out of the resin part). Modification of the particle surface may also enhance the adhesion of the epoxy resin matrix to the particle when the adhesive is cured. The particle may alternatively be irradiated so as to change the extent of crosslinking of the polymer(s) constituting the particle in different regions of the particle. For example, the particle may be treated with gamma radiation such that the particle material is more highly crosslinked near the surface of the particle than in the center of the particle.

Particles treated with a reactive gas or other reagent to modify the outer surfaces of the particles by, for instance, creating polar groups (e.g., hydroxyl groups, carboxylic acid groups) on the particle surface, are also suitable for use in the present invention. Illustrative reactive gases include, for example, ozone, Cl₂, F₂, O₂, SO₃, and oxidative gases. Methods of surface modifying rubber particles using such reagents are known in the art and are described, for example, in U.S. Patent Nos. 5,382,635; 5,506,283; 5,693,714; and 5,969,053, each of which is incorporated herein by reference in its entirety. Suitable surface modified rubber particles are also available from commercial sources, such as the rubbers sold under the tradename VISTAMER by Exousia Corporation.

Typically, the core will comprise from about 50 to about 95 percent by weight of the particle while the shell will comprise from about 5 to about 50 percent by weight of the particle. The particles are relatively small in size. For example, the average particle size may be from about 30 nm to about 10,000 nm, advantageously from about 50 nm to about 5,000 nm. In certain embodiments the rubber particles have an average diameter of less than about 500 nm. For example, the core-shell particles may have an average diameter within the range of from about 25 nm to about 400 nm.

Methods of preparing particles having a core-shell structure are known in the art and are described, for example, in U.S. Patent Nos. 4,419,496, 4,778,851, 5,290,857, 5,981,659, 6,111,015, 6,147,142 and 6,180,693, each of which is incorporated herein by reference in its entirety.

The core shell particles may be dispersed in a matrix, for example a liquid epoxy matrix. Examples of epoxy matrices include the diglycidyl ethers of bisphenol A, F or S, or biphenol, novolac epoxies, and cycloaliphatic epoxies. Examples of phenolic resins include bisphenol-A based phenoxies. The core shell particles dispersed in a matrix may be prepared as a masterbatch. For example, the particles are prepared as aqueous dispersions or emulsions. Such dispersions or emulsions may be combined with the desired liquid epoxy resin or mixture of liquid epoxy resins and the water and other volatile substances removed by distillation or the like to provide the masterbatch. One method of preparing such masterbatches is described in more detail in International Patent Publication No. WO 2004/108825, incorporated herein by reference in its entirety. Suitable dispersions of particles having a core-shell structure in an epoxy resin matrix are available from Kaneka Corporation under the trade name KANE ACE MX.

The Kaneka Corporation masterbatch material comprises core-shell particles dispersed in liquid epoxy resins. The core-shell particles available from Kaneka are believed to have a core made from a copolymer of (meth)acrylate-butadiene-styrene, where the butadiene is the primary component. Other commercially available masterbatches of core-shell rubber particles dispersed in epoxy resins include GENIOPERL M23A (a dispersion of 30 weight percent core-shell particles in a liquid aromatic epoxy resin based on bisphenol A diglycidyl ether; the core-shell particles have an average diameter of about 100 nm and contain a crosslinked silicone elastomer core onto which an epoxy-functional acrylate copolymer has been grafted); the silicone elastomer core represents about 65 weight percent of the core-shell particle), available from Wacker Chemie GmbH.

Where the particles are initially provided in dry form, it may be advantageous to ensure that such particles are well dispersed in either or both of the resin part or the curing agent part. That is, agglomerates of core-shell particles are preferably broken up so as to provide discrete individual particles, which may be accomplished by intimate and thorough mixing of the dry particles with some or all of the other components of the composition part. For example, dry particles may be blended with liquid epoxy resin for a length of time effective to essentially completely disperse the core-shell particles and break up any particle agglomerations.

The core shell particles may be present in the disclosed composition in an amount in the range of about 1 % to about 50% by weight of the mixed, two part composition, advantageously about 2% to about 40% by weight of the mixed, two part composition and desirably about 10% to about 30% by weight of the mixed, two part composition. The lower limit will be based on the increase in toughness desired. At the higher ranges of core shell particle content, viscosity increases may be observed in the particle comprising part in relatively short periods of time. Use of higher amounts of core-shell particles will increase cost of the composition and may lower strength of the resulting composition without providing a corresponding increase in toughness.

Use of these core shell particles allows for toughening to occur in the cured composition. That is, because of the two phase separation inherent in the composition due to the core shell particles - as contrasted for instance with a liquid rubber that is miscible or partially miscible or even immiscible in the disclosed composition - there is a minimum disruption of the matrix properties, as the phase separation in the composition is often observed to be substantially uniform in nature.

The impact properties of cured two part adhesive compositions in accordance with the present disclosure can be improved or modified by the incorporation of one or more auxiliary impact modifiers and/or toughening agents. Suitable auxiliary impact modifier/toughening agents are generally polymeric or oligomeric in character, have glass transition (Tg) temperatures below 20°C (advantageously below 0°C, more advantageously below -30°C or below -50°C), and may have one or more functional groups capable of participating in the reaction of the epoxy resin component when the adhesive composition is cured. Suitable reactive functional groups include epoxy groups, hydroxyl groups, carboxylic acid groups and the like.

One type of auxiliary impact modifiers and/or toughening agent comprises the epoxy-based prepolymers (sometimes described as "adducts") obtained by reacting one or more epoxy resins with one or more amine-terminated polymers. The epoxy resins useful for preparing epoxy based prepolymers may be selected from among the epoxy resins described hereinabove, with particular preference being given to the diglycidyl ethers of polyphenols such as bisphenol A and bisphenol F (for example, having epoxy equivalent weights of from about 150 to about 1000). Liquid epoxy resins are preferred although mixtures of solid and liquid epoxy resins may be suitably employed.

Amine terminated polymers useful for preparing epoxy-based prepolymers include, for example, one or more of:

Amine terminated polyethers such as linear amine-terminated polyoxyethylene ethers having the formula:

H₂N-(CH₂)₂-[O-(CH₂)₂-O-(CH₂)₂]ₙ-NH₂

in which n preferably is 17 to 27.

Amine terminated polyethers such as linear amine-terminated polyoxypropylene ethers having the formula: 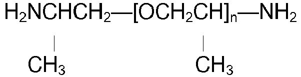 in which n preferably is 5 to 100. They are obtainable from Huntsman Chemical under the trade name JEFFAMINE® (D-series). The number average molecular weight of such amine-terminated polyoxypropylene ethers may vary, for example, from about 200 to about 2000.

Amine terminated polyethers such as trifunctional compounds having the formula:
in which A is: 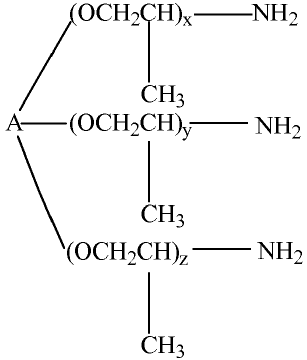 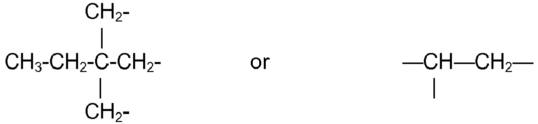
and x, y and z independently of each other are 1 to 40 and x+y+z is preferably >6. Representative examples of these trifunctional compounds are available commercially from Huntsman Chemical under the tradename JEFFAMINE® (T-series). Such substances typically have number average molecular weights of from about 400 to about 5000.

Amino silane capped polymers, such as those that may be embraced by the general formula: 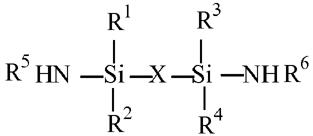 where R¹, R², R³ and R⁴ may be the same or different and are selected from hydrogen, hydroxyl, alkyl, alkoxy, alkenyl, alkenyloxy, aryl, and aryloxy; R⁵ and R⁶ may be the same or different and are selected from hydrogen, alkyl and aryl; and X is selected from alkylene, alkenylene, arylene, with or without interruption by a heteroatom; polyurethanes; polyethers; polyesters; polyacrylates; polyamides; polydienes; polysiloxanes; and polyimides.

Amine-terminated siloxanes, such as diamino siloxanes embraced by the formula: 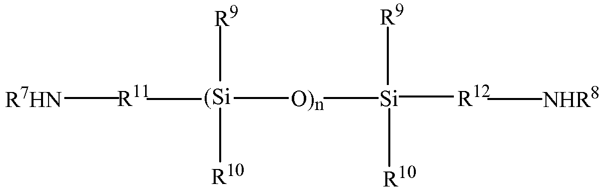 where R¹¹ and R¹² may be the same or different and are selected from alkylene, arylene, alkylene oxide, arylene oxide, alkylene esters, arylene esters, alkylene amides or arylene amides; R⁹ and R¹⁰ may be the same or different and are selected from alkyl or aryl; R⁷ and R⁸ are as defined above and n is 1-1,200.

Certain amino-modified silicone fluids that are commercially available from Shin-Etsu under the trade designations KF857, KF858, KF859, KF861, KF864 and KF880 may be useful herein. In addition, Wacker Silicones offers commercially a line of amino-functional silicone fluids designated as L650, L651, L653, L654, L655 and L656, and an amino-functional polydimethylsiloxane under the tradename WACKER FINISH WR 1600 that may be useful herein.

Other amino-functionalized silanes or siloxanes useful in forming the adduct include materials available from Degussa's Sivento division, such as a proprietary aminofunctional silane composition (called DYNASYLAN® 1126), an oligomeric diaminosilane system (called DYNASYLAN® 1146), N-vinylbenzyl-N'-aminoethyl-e-aminopropylpolysiloxane (DYNASYLAN® 1175), N-(n-butyl)-3-aminopropyltrimethoxysilane (DYNASYLAN® 1189), a proprietary aminofunctional silane composition (called DYNASYLAN® 1204), N-(2-aminoethyl)-3-aminopropylmethyldimethoxysilane (DYNASYLAN® 1411), 3-aminopropylmthyldiethoxysilane (DYNASYLAN® 1505), 3-aminopropylmethyldiethoxysilane (DYNASYLAN® 1506), 3-aminopropyltriethoxysilane (DYNASYLAN® AMEO), a proprietary aminosilane composition (called DYNASYLAN® AMEO-T), 3-aminopropyltrimethoxysilane (DYNASYLAN® AMMO), N-2-aminoethyl-3-aminopropyltrimethoxysilane (DYNASYLAN® DAMO), N-(2-aminoethyl)-3-aminopropyltrimethoxysilane (DYNASYLAN® DAMO-T) and a triamino-functional propyltrimethoxysilane (called DYNASYLAN® TRIAMO).

Mixtures of amine-terminated polyethers may be used. Amine-terminated polyethers containing both oxyethylene and oxypropylene repeating units may also be utilized as the amino-terminated polyether. Preferably, the amino-terminated polyether contains at least two amine groups per molecule. Preferably, the amine groups are primary amine groups. The amino-terminated polyether is preferably aliphatic.

Generally speaking, the ratio of epoxide groups to amine groups in the adduct will be chosen based on use in the curable composition. An adduct having an excess of epoxy groups over the amino groups (i.e., the epoxy-based prepolymer contains essentially no free amine groups) is useful for addition to a resin part. Typically, there is a 1.5 to 10-fold excess, for example a 3.5-fold excess of epoxy groups over the active hydrogen equivalents (AHEW) of the amine-terminated polyether. An excess of amino groups over epoxide groups (i.e., the epoxy-based prepolymer contains no free epoxide groups) is useful for addition to a curing agent part. Typically, the epoxy-based prepolymer is initially prepared in a first stage by reacting the epoxy resins with the amine-terminated polymer in the desired ratio and at an elevated temperature for a suitable time. The preparation of epoxy-based prepolymers from amine-terminated polyethers is known in the art and is described, for example, in U.S. Patent Nos. 5,084,532 and 6,015,865, each of which is incorporated herein by reference in its entirety.

Other tougheners or impact modifiers known in the epoxy adhesive art may be useful in addition to, or as a substitute for, the aforementioned epoxy-based prepolymers derived by reaction of amine-terminated polyethers with epoxy resins. Generally speaking, such tougheners and impact modifiers are characterized by having glass transition temperatures below about 0°C, advantageously below about - 30°C and preferably below about -50°C. Examples of such tougheners and impact modifiers include, but are not limited to:

Reaction products of epoxy-reactive copolymers of conjugated dienes such as butadiene (especially epoxy-reactive copolymers of butadiene with relatively polar co-monomers such as (meth)acrylonitrile, (meth)acrylic acid, or alkyl acrylates, e.g., carboxyl-terminated butadiene-nitrile rubbers, such as the products available commercially from Noveon under the trade name HYCAR) with epoxy resins (as described, for example, in U.S. Patent Application Publication No. US 2005/0070634 and U.S. Patent Nos. 6,776,869 and 6,998,011, each of which is incorporated herein by reference in its entirety);
- Adducts of anhydrides (e.g., unsaturated anhydrides such as maleic anhydride)and diene polymers (e.g., liquid 1,4-cis polybutadienes), typically having number average molecular weights between about 1000 and about 5000, including for example, the adducts sold under the tradename POLYVEST by Degussa Corporation, as well as further reaction products of such adducts with epoxy resins;
- Polyesters, including, for example, amorphous, crystalline and/or semi-crystalline polyesters, including saturated polyesters, prepared by condensation of aliphatic and/or aromatic dicarboxylic acids (or the corresponding alkyl esters or anhydrides with diols having a chain length of C₂ to C₂₀, the polyesters being of medium molecular weight (e.g., about 1000 to about 20,000 number average molecular weight), such as the polyesters sold under the tradename DYNACOLL by Degussa Corporation, and including polyesters functionalized with carboxylic acid and/or hydroxyl endgroups, as well as adducts of such functionalized polyesters with epoxy resins;
- Adducts of dimeric fatty acids with epoxy resins (including, for example, the adducts sold under the tradename EPON 872 by Resolution Performance Products, the adducts sold under the tradename HY-POX DA323 (formerly ERISYS EMDA 3-23) by CVC Specialty Chemicals, as well as those adducts described in U.S. Patent No. 5,218,063, incorporated herein by reference in its entirety);
- Adducts of hydroxyl-containing triglycerides (e.g., castor oil) with epoxy resins (including, for example, the adducts sold under the tradename HELOXY 505 by Resolution Performance Products);
- Adducts of polysulfides with epoxy resins (including, for example, the adducts sold under the tradename THIOPLAST EPS 350 by Akzo Nobel;
- Adducts of amine-terminated polydienes and diene copolymers with epoxy resins;
- Polyether prepolymers capped with hydroxyarylcarboxylic or hydroxyaralkylcarboxylic acids, or a capped polyester, polythioester or polyamide containing polyether segments, as described, for example, in U.S. Patent No. 5,202,390, incorporated herein by reference in its entirety, in particular the tougheners of formula I described in detail at column 1, line 59, to column 2, line 16, of said patent;
- Block copolymers, wherein at least one polymeric block of the copolymer has a glass transition temperature below 20°C (preferably below 0°C or below -30°C or below -50°C) and at least one polymeric block of the copolymer has a glass transition temperature above 20°C (preferably above 50°C or above 70°C), in particular block copolymers containing a polystyrene block, a 1,4-polybutadiene block (preferably having a glass transition temperature below about -60 degrees C) and a polymethylmethacrylate block (preferably, having a highly, i.e., >80%, syndiotactic structure), such as the SBM copolymers made by living polymerization methods using nitroxide initiator (such as the methods described in U.S. Patent Nos. 5,677,387, 5,686,534, and 5,886,112, each of which is incorporated herein by reference in its entirety, and sold under the tradename NANOSTRENGTH by Arkema and the block copolymers described in U.S. Patent No. 6,894,113, incorporated herein by reference in its entirety;
- Carboxyl-functionalized adducts of amino- or hydroxyl-terminated polymers and carboxylic anhydrides, as well as further reaction products of such adducts with epoxy resins (such as those described in U.S. Patent No. 6,884,854 and U.S. Patent Application Publication No. 2005/0215730, each of which is incorporated herein by reference in its entirety);
- Epoxy-terminated polyethers, such as polymers of alkylene oxides like ethylene oxide, propylene oxide or mixtures thereof that have been functionalized with epoxy groups, including by reacting the hydroxy groups of a polyalkylene glycol with epichlorohydrin;
- Phenol-terminated and aminophenyl-terminated products produced by reacting a stoichiometric excess of a carboxylic anhydride or dianhydride with a diamine or polyamine and then further reacting the excess carboxylic anhydride or carboxylic acid groups with at least one polyphenol or aminophenol, as described, for example, in U.S. Patent Application Publication No. 2004/0181013, incorporated herein by reference in its entirety.

Mixtures of different auxiliary impact modifiers/toughening agents may be used. The auxiliary impact modifier/toughening agent may be present in the disclosed composition in an amount in the range of about 1 % to about 50% by weight of the mixed, two part composition, advantageously about 5% to about 40% by weight of the mixed, two part composition and desirably about 10% to about 30% by weight of the mixed, two part composition. Cost and viscosity of the resulting curable composition part may dictate the upper limit.

A diluent can optionally be used together with the disclosed compositions. The diluent may be reactive or non-reactive. In the reactive sense, the diluent should possess functionality appropriate to react with the epoxy resin and/or other components in the composition. In the non-reactive sense, the non-reactive diluent may affect the flexibility of the cured product of the composition and/or be used to improve the mixability of the components of the composition and/or the composition itself. Reactive diluents can be monofunctional or advantageously can be polyfunctional. One reactive diluent is monofunctional epoxy resin. The monofunctional epoxy resin should have an epoxy group with an alkyl group, examples of which include C₆-C₂₈ alkyl glycidyl ethers, C₆-C₂₈ alkyl diglycidyl ethers, C₆-C₂₈ fatty acid glycidyl esters and C₆-C₂₈ alkylphenol glycidyl ethers. Another reactive diluent comprises a mono-epoxide (e.g., monoglycidyl ethers of alkyl- and alkenyl-substituted phenols).

Additional reactive diluents include those having (meth)acrylate and/or vinyl ether functionality. In some embodiments that include a reactive diluent, the reactive diluent is a "hybrid" diluent because it includes at least one vinyl ether or 1-alkenyl ether group and at least one (meth)acrylate group. For instance, the reactive diluent may be represented by the following formula (A): 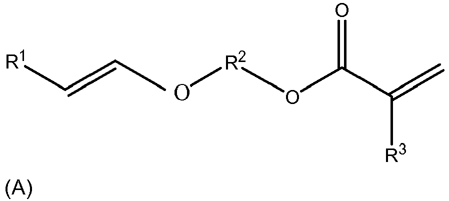 where R¹ is selected from hydrogen; aliphatic C₁₋₆ alkyl; and C₁₋₆ cycloalkyl; R² is selected from C₂₋₂₀ alkylene; C₂₋₂₀ hydrocarbon diradical; and polyalkylene oxide; and R³ is selected from hydrogen and methyl.

Here, the reactive diluent may have a molecular weight of less than about 1500. Advantageously, the molecular weight is less than about 750, more desirably less than about 500. The viscosity of the reactive diluent may be less than about 5000 cps at 25°C, more desirably less than about 2000 cps and even more desirably about 50-500 cps.

Examples of suitable reactive diluents include, but are not limited to 2-(2'-vinyloxyethoxy)ethyl acrylate, 2-(2'-vinyloxyethoxy)ethyl methacrylate, 2-vinyloxyethyl acrylate, 2-vinyloxyethyl methacrylate, 2-(2'-prop-1-enyloxyethoxy)ethyl methacrylate, 2-(2'-prop-1-enyloxyethoxy)ethyl acrylate, 1,4-butanediol diglycidal ether and combinations thereof. Additional reactive diluents include for instance hydroxyethyl methacrylate, hydroxypropyl methacrylate, dimethyl acrylamide and isobornyl acrylate, to name but a few.

Suitable non-reactive diluents for use in the present invention include, for example, sulfonate diluents, phosphate ester diluents, sulfonamide diluents, glycerin triester diluents, dialkyl esters of aliphatic dicarboxylic acids, glycol esters of benzoic acid and the like. Preferably, the diluent is not a phthalate-containing diluent.

Sulfonate diluents include alkyl sulfonic acid esters of phenolic compounds such as the phenyl cresyl esters of pentadecyl sulfonic acid. Suitable commercially available sulfonate diluents include the diluent sold by Bayer under the tradename MESAMOLL.

Phosphate ester diluents include the organic esters of phosphoric acid, such as, for example, phenolic esters of phosphoric acid, e.g., tricresyl phosphate, cresyl diphenyl phosphate, isopropylated triphenyl phosphate, 2-ethylhexyl diphenyl phosphate, isodecyl diphenyl phosphate, and triphenyl phosphate, as well as other triaryl phosphates and alkyl diaryl phosphates. Other suitable phosphate diluents include, but are not limited to, tributoxyethyl phosphate, tributyl phosphate, and the like.

Glycerin triester diluents include the compounds described in U.S. Patent No. 6,652,774, incorporated herein by reference in its entirety.

Sulfonamide diluents may also be utilized, including, for example, aromatic sulfonamides such as N-(2-hydroxypropyl) benzene sulfonamide (sold under the tradename UNIPLEX 225 by Unitex Chemical Co.), N-ethyl toluene sulfonamides, N-(n-butyl) benzene sulfonamide, N-cyclohexyl-p-toluenesulfonamide, and the like.

Other diluents suitable for use in the present invention include C₃-C₂₀ dialkyl esters of aliphatic dicarboxylic acids such as adipic acid, e.g., dioctyl adipate, dibutyl adipate, di(2-ethylhexyl) adipate, diisononyl adipate, diisodecyl adipate, and di(heptyl, nonyl) adipate as well as glycol esters of benzoic acid such as dipropylene glycol dibenzoate and dipropylene glycol monobenzoate.

The mixed, two part adhesive compositions disclosed herein may contain, for example, up to about 15 weight percent total of diluent.

In certain embodiments of the invention, the auxiliary impact modifier/toughening agent selected for use may itself be a diluent and thus have flexibilizing properties. For example, where the additive or auxiliary impact modifier/toughening agent is a polyurethane sold under the tradename DESMOCAP 2540 (which is described as a linear prepolymer based on TDI and polyalkylene glycol prepared using double metal cyanide catalysts, with the isocyanate groups being blocked) by Bayer Material Science could be suitable for such purposes.

The disclosed composition can comprise one or more products to help improve adhesion of the cured adhesive to a substrate surface, especially to a metallic substrate surface such as is commonly encountered in industrial applications. Useful adhesion promoter materials include reaction products of epoxy resins and compounds containing chelating functional groups (herein called "chelate-modified epoxy resins") and functional silanes. Such reaction products include those substances commonly referred to in the art as "chelate epoxies" or "chelating epoxy resins". The chelating functional groups include those functional groups capable of forming chelate bonds with divalent or polyvalent metal atoms, either by themselves or in cooperation with other functional groups positioned on the same molecule. Suitable chelating functional groups include, for example, phosphorus-containing acid groups (e.g., -PO(OH)₂), carboxylic acid groups (-CO₂H) sulfur-containing acid groups (e.g., -SO₃H), amino groups, and hydroxyl groups (particularly hydroxyl groups adjacent to each other on aromatic rings). The preparation of such reaction products may be carried out by methods known in the art such as, for example, those methods described in U.S. Patent Nos. 4,702,962 and 4,340,716, European Patent No. EP 342 035 and Japanese Patent Document Nos. JP 58-063758 and JP 58-069265, each of which is incorporated herein by reference in its entirety. Reaction products of epoxy resins and compounds containing chelating functional groups are also available from commercial sources such as, for example, the ADEKA Resins EP-49-10N, EP-49-55C, EP-49-10, EP-49-20, EP-49-23, and EP-49-25 sold by Asahi Denka.

Other compounds having metal chelating properties may also be used to help enhance the adhesion of the cured adhesive to a substrate surface, including, for example, the adhesion promoters described in U.S. Patent Application Publication No. US 2005/0129955, incorporated herein by reference in its entirety. Also suitable for use as adhesion promoters are the acetoacetate-functionalized modifying resins sold by King Industries under the brand name K-FLEX XM-B301.

Some functional silanes include a reactive component that can bond or interact with the composition, a silane component that can react with substrates and/or other silane modified materials and a hydrolysable component. Some suitable functional silanes having an epoxy reactive component are sold by Momentive Performance Materials Inc. of Connecticut.

The mixed, two part adhesive compositions disclosed herein may contain, for example, up to about 5 weight percent of adhesion promoter

The disclosed compositions can optionally comprise one or more types of fillers, such as the various platy (flake like) fillers, the various ground or precipitated chalks, quartz powder, alumina, non-platy clays, dolomite, carbon fibers, glass fibers, polymeric fibers, titanium dioxide, fused silica, carbon black, calcium oxide, calcium magnesium carbonates, barite and, especially, silicate-like fillers of the aluminum magnesium calcium silicate type, for example wollastonite and chlorite. The filler surface can optionally be treated, for example, by reaction with a coupling agent such as a silane. Typically, the mixed, two part compositions useful herein can contain up to about 25 weight percent of fillers.

The disclosed adhesive composition can optionally comprise other common adjuvants and additives, such as flow auxiliaries, coupling agents (e.g., silanes), wetting agents, tackifiers, flame retardants, thixotropic and/or rheology control agents, ageing and/or corrosion inhibitors, stabilizers and/or coloring pigments. Depending on the requirements made of the adhesive application with respect to its processing properties, its flexibility, the required rigidifying action and the adhesive bond to the substrates, the relative proportions of the individual components may vary within comparatively wide limits.

The disclosed composition is suitable for adhering together parts made of materials, including, for example, wood, metal, coated or pretreated metal, glass, ceramic, plastic, filled plastic, thermoset materials such as sheet molding compound and fiberglass and the like. The parts to be joined using the adhesive may be the same as, or different from, each other.

The resin part and curing agent part are stored separately. The two parts are homogeneously mixed to form the curable composition shortly before use. The mixed, curable composition is typically applied at about room temperature to one or both of the substrates to be joined. The substrates are contacted such that the adhesive is located between and in contact with the substrates to be bonded together. The contacted parts are held in relative position while the composition cures.

Once the resin part and the curing agent part are mixed the curing process starts. It is not necessary to heat the adhesive composition or substrates to begin the curing process. Temperature control can optionally be used to modify the time required for the mixed adhesive composition to cure.

In one embodiment the disclosed resin part and curing agent part are each components of a two part adhesive package. Each part is chemically separated and packaged as convenient for use. The resin part ands curing agent part are typically homogeneously mixed and dispensed onto a substrate surface. For example, each component can be contained in one chamber of a dual cartridge unit. The dual cartridge unit is placed in an applicator so that actuation of the applicator dispenses and mixes predefined volumes of the resin part and the curing agent part and dispenses the mixed curable composition onto a substrate surface. Automated application equipment for mixing and dispensing a two part adhesive composition is known. The use of a liquid or flowable resin part and a liquid or flowable curing agent part is advantageous for mixing and dispensing.

The following examples are included for purposes of illustration so that the disclosure may be more readily understood and are in no way intended to limit the scope of the disclosure unless otherwise specifically indicated.

Composition A is a commercially available two part curable composition. The resin component in composition A comprises an epoxy resin component including a single type of core-shell particle, a silane adhesion promoter and fumed silica. Composition A did not include an auxiliary impact modifier/toughening agent.

Compositions 1 - 9 were prepared using the same epoxy base resin and the same amount of the same curing agent part comprising the same combination of reactive polyamide resin and aliphatic polyamine curing agent. Various combinations and amounts of core-shell particles, impact modifier/toughening agent and other adjuvants. The compositions are set out in the table below.

| Table 1 | | | | | | | | | | |
|---|---|---|---|---|---|---|---|---|---|---|
| | | Composition | | | | | | | | |
| component | material | 1 | 2 | 3 | 4 | 5 | 6 | 7 | 8 | 9 |
| resin part | epoxy resin¹ | 41 | 52.5 | 57 | 70.2 | 44.8 | 25 | 6 | 64 | 38.5 |
| resin part | silane² | 1 | 1.5 | 1.5 | --- | --- | 4.8 | 5 | 1 | 1.3 |
| resin part | epoxy resin/core-shell rubber particle blend' | 38 | 30.5 | 33 | --- | --- | 25.2 | 47 | --- | 28 |
| resin part | auxiliary impact modifier/toughening agent⁴ | 20 | --- | --- | 20.7 | 39.0 | 31.6 | 29.5 | 19 | 17.5 |
| resin part | core-shell acrylic particle⁵ | --- | 15.5 | 8.5 | 8.3 | 15.5 | 12.7 | 11.8 | 7.6 | 7 |
| resin part | polybutadiene/styrene core- polymethylmethacrylate shell particle⁶ | --- | --- | --- | --- | --- | --- | --- | 7.6 | 7 |
| resin part | siloxane treated fumed silica⁷ | --- | --- | --- | 0.8 | 0.7 | 0.7 | 0.7 | 0.8 | 0.7 |
| | No. tougheners | two | Two | two | two | two | three | three | three | four |
| | | | | | | | | | | |
| curing agent part | reactive polyamide resin⁸ | 80 | 80 | 80 | 80 | 80 | 80 | 80 | 80 | 80 |
| curing agent part | aliphatic polyamine curing agent⁹ | 20 | 20 | 20 | 20 | 20 | 20 | 20 | 20 | 20 |

| | | | | | | | | | | |
|---|---|---|---|---|---|---|---|---|---|---|
| 1 EPON 863 from Hexion Specialty Chemicals. 2 SILQUEST A-187 from Momentive Performance Materials, Inc. 3 KANE ACE MX-135 from Kaneka Corporation. 4 epoxy resin/amine terminated polyether reaction product. 5 ZEON F351 from Nippon Zeon. 6 Paraloid EXL-2691 from Rohm & Haas Company. 7 CAB-O-SIL TS-720 from Cabot Corporation. 8 VERSAMID 140 from Cognis. 9 EPIKURE 3245 from Hexion Specialty Chemicals. | | | | | | | | | | |

| Table 2 | | | | | | | | | | |
|---|---|---|---|---|---|---|---|---|---|---|
| | Composition | | | | | | | | | |
| | A | 1 | 2 | 3 | 4 | 5 | 6 | 7 | 8 | 9 |
| No. of Tougheners | one | two | two | two | two | two | three | three | three | four |
| Tensile Shear (N/mm²) | 20.77 | 26.45 | 15.27 | 14.10 | 13.58 | 21.04 | 25.19 | 24 | 28 | 28 |
| Failure Mode* | A | A | A/C | A | A | A/C | A/C | A/C | A/C | A/C |
| T-Peel (N/mm) | 0.25 | 0.53 | 0.65 | 0.75 | 0.31 | 0.20 | 2.29 | 3.84 | 3.08 | 4.14 |
| Failure Mode* | A | A | A | A | A | A | A/C | A/C | A/C | A/C |
| Wedge Impact (N/mm) | 0.26 | 4.50 | 3.10 | 4.43 | 1.04 | 0.76 | 10.80 | 17.32 | 8.14 | 12.85 |
| Failure Mode* | A | A | A/C | A | A | A/C | C | C | C | C |

| | | | | | | | | | | |
|---|---|---|---|---|---|---|---|---|---|---|
| *Failure Mode: A- adhesive, C- cohesive, A/C- adhesive/cohesive mix Tensile Shear, ASTM D1002 T-Peel Strength, ASTM D1876 Wedge Impact, ISO 11343 Specimens: grit blasted mild steel (GBMS) Bond thickness: 125 µm Bond overlap: 12.5 mm Test temperature: ambient | | | | | | | | | | |

Conventional composition A has a single particulate toughener. Composition A has good strength, some toughness as shown by the T-Peel and wedge impact results and an adhesive failure mode for all tests.

Compositions 1 - 5 each had two toughening agents. Compositions 2, 3 and 4 had lower tensile shear strength than conventional composition A while compositions 1 and 5 had higher tensile shear strength than conventional composition A. Compositions 1 - 5 had similar or improved T-Peel results to conventional composition A but all failures remained in an adhesive failure mode. Compositions 1, 3 and 4 had a wedge impact adhesive failure mode while compositions 2 and 5 had a mixed adhesive/cohesive failure mode.

Compositions 6 - 8 each had three toughening agents. These compositions had higher tensile shear strength than conventional composition A or compositions 2 - 5. All of compositions 6 - 8 had surprisingly high T-Peel results and a better mixed adhesive/cohesive failure mode. All of compositions 6 - 8 had desirably improved wedge impact results with composition 7 having a higher result than any of the other compositions. All of compositions 6 - 8 had a desirable wedge impact cohesive failure mode.

Composition 9 had four toughening agents. Composition 9 had a high tensile strength. Composition 9 had the highest T-Peel result of all compositions and a mixed adhesive/cohesive failure mode. Composition 9 had the second highest wedge impact result and a desirable wedge impact cohesive failure mode.

The results indicate that achieving a combination of strength, toughness and failure mode is not predictable even in a composition using the same epoxy base and the same hardener system.

Compositions 10, 11 and 12 are each novel, two part curable compositions comprising at least an epoxy resin component, a plurality of different types of core-shell particles and an auxiliary toughener.

The resin portion of compositions 10, 11 and 12 were prepared by preheating an epoxy resin/core-shell rubber particle blend to a maximum of about 50°C. The remaining liquid components were added and stirred for about 20 minutes under vacuum. Subsequently, the solid components were added and mixing continued for about 40 minutes under vacuum.

The curing agent portion of compositions 10, 11 and 12 were prepared by mixing the components for about 40 minutes under vacuum.

| Table 3- composition 10 | | |
|---|---|---|
| component | material | weight % |
| resin part | epoxy resin/core-shell rubber particle blend¹ | 44 |
| resin part | auxiliary impact modifier/toughening agent² | 27 |
| resin part | core-shell acrylic particle³ | 10.5 |
| resin part | epoxy resin⁴ | 10 |
| resin part | aliphatic diepoxide⁵ | 7.5 |
| resin part | silane⁶ | 1.0 |
| | | |
| curing agent part | reactive polyamide resin⁷ | 80 |
| curing agent part | aliphatic polyamine curing agent⁸ | 20 |

| | | |
|---|---|---|
| 1 KANE ACE MX-135 from Kaneka Corporation 2 epoxy resin/amine terminated polyether reaction product. 3 F351 from Nippon Zeon. 4 EPON 863 from Hexion Specialty Chemicals. 5 GE-21 from CVC Specialty Chemicals, Inc. 6 SILQUEST A-187 from Momentive Performance Materials, Inc. 7 VERSAMID 140 from Cognis. 8 EPIKURE 3223 from Hexion Specialty Chemicals. | | |

| Table 4- composition 11 | | |
|---|---|---|
| component | material | weight % |
| resin part | epoxy resin/core-shell rubber particle blend¹ | 44.2 |
| resin part | auxiliary impact modifier/toughening agent² | 28 |
| resin part | core-shell acrylic particle³ | 11.1 |
| resin part | epoxy resin⁴ | 10 |
| resin part | aliphatic diepoxide⁵ | 5.0 |
| resin part | silane⁶ | 1.0 |
| resin part | siloxane treated fumed silica⁷ | 0.7 |
| | | |
| curing agent part | reactive polyamide resin⁸ | 82.9 |
| curing agent part | aliphatic polyamine curing agent⁹ | 17.1 |

| | | |
|---|---|---|
| 1 KANE ACE MX-135 from Kaneka Corporation 2 epoxy resin/amine terminated polyether reaction product. 3 ZEON F351 from Nippon Zeon. 4 EPON 863 from Hexion Specialty Chemicals. 5 GE-21 from CVC Specialty Chemicals, Inc. 6 SILQUEST A-187 from Momentive Performance Materials, Inc. 7 CAB-O-SIL TS-720 from Cabot Corporation. 8 VERSAMID 140 from Cognis. 9 EPIKURE 3223 from Hexion Specialty Chemicals. | | |

| Table 5 - composition 12 | | |
|---|---|---|
| component | material | weight % |
| resin part | epoxy resin¹ | 38.5 |
| resin part | epoxy resin/core-shell rubber particle blend² | 28 |
| resin part | auxiliary impact modifier/toughening agent³ | 17.5 |
| resin part | polybutadiene/styrene core- polymethylmethacrylate shell particle⁴ | 7 |
| resin part | core-shell acrylic particle⁵ | 7 |
| resin part | silane⁶ | 1.3 |
| resin part | siloxane treated fumed silica⁷ | 0.7 |
| | | |
| curing agent part | reactive polyamide resin⁸ | 60 |
| curing agent part | aliphatic polyamine curing agent⁹ | 40 |

| | | |
|---|---|---|
| 1 EPON 863 from Hexion Specialty Chemicals. 2 KANE ACE MX-135 from Kaneka Corporation. 3 epoxy resin/amine terminated polyether reaction product. 4 Paraloid EXL-2691 from Rohm & Haas Company. 5 ZEON F351 from Nippon Zeon. 6 SILQUEST A-187 from Momentive Performance Materials, Inc. 7 CAB-O-SIL TS-720 from Cabot Corporation. 8 VERSAMID 140 from Cognis. 9 EPIKURE 3245 from Hexion Specialty Chemicals. | | |

### General:

Sample A was mixed at a ratio of 2 parts by volume resin part to 1 part by volume curing agent part to prepare a curable composition. Samples 10, 11 and 12 were mixed at a ratio of 4 parts by volume resin part to 1 part by volume curing agent part to prepare curable compositions. All mixed samples were allowed to cure for about 24 hours at room temperature followed by 4 hours at 65°C before testing. Although the mixed samples are expected to cure at about room temperature and in a short time to provide substantial physical properties the above length of time at room temperature and at elevated temperature was designed to provide a standard reference cure level for the different materials.

Gel Time: ASTM D2471: Sample mass: 100 g, Sample temperature: 25°C, Test temperature: 20°C to 25°C
1. Individually package the resin and curing agent into a 400 ml cartridge (4:1 volume).
2. Adjust the 400ml cartridge to a temperature of 25 +/- 0.6°C, using an oven.
3. Uniformly mix the components through a static mixer nozzle (Henkel part number 98667), dispensing 100 g into an 8 ounce plastic cup.
4. Record starting time when mixing begins.
5. Regularly probe the center of the reacting mass until gel occurs.
6. Record the time of gel when material no longer adheres to a clean probe or the center of reacting mass becomes hard.
7. Report the gel time.

| Table 6 | | | |
|---|---|---|---|
| | A | 11 | 12 |
| Gel Time, 100g, minutes, | 45 | 45 | 25 |

Compositions 11 and 12 had desirably short gel times for many structural uses. The gel time can be adjusted from about 20 minutes to greater than 240 minutes by adjusting the hardener part composition and amount.

Tensile Shear: ASTM D1002: Specimens: grit blasted mild steel (GBMS), substrate thickness: 0.063 in., bond thickness: as noted in Table, bond overlap: 0.5 in. x 1 in., testing rate: 0.05 in/min., test temperature: 20°C to 25°C

Results are the average for 5 samples unless otherwise noted.

| Table 7 | | | |
|---|---|---|---|
| Tensile Shear | A | 11 | 12 |
| Bond Thickness: 5 mils | | | |
| Mean, N/mm² | 33.1 | 29.5 | 30.5 |
| StdDev, N/mm² | 1.0 | 1.2 | 1.7 |
| Mean, psi | 4802 | 4273 | 4426 |
| StdDev, psi | 147 | 175 | 247 |
| Failure Mode | mixed | cohesive | cohesive |

| Table 8 | | | |
|---|---|---|---|
| Tensile Shear | A | 11 | 12 |
| Bond Thickness: 10 mils | | | |
| Mean, N/mm² | 30.9 | 28.3 | 32.4 |
| StdDev, N/mm² | 1.6 | 0.9 | 4.8 |
| Mean, psi | 4480 | 4100 | 4702 |
| StdDev, psi | 237 | 128 | 692 |
| Failure Mode | mixed | cohesive | cohesive |

| Table 9 | | | |
|---|---|---|---|
| Tensile Shear | A | 11 | 12 |
| Bond Thickness: 20 mils | | | |
| Mean, N/mm² | 29.0 | 23.4 | 27.3 |
| StdDev, N/mm² | 1.1 | 1.1 | 3.6 |
| Mean, psi | 4206 | 3400 | 3951 |
| StdDev, psi | 154 | 158 | 528 |
| Failure Mode | mixed | cohesive | cohesive |

The tensile shear test measures the maximum shear stress that can be sustained by a material before rupture. It is the ultimate strength of a material subjected to shear loading.

Compositions 11 and 12 had slightly lower tensile shear strengths than conventional composition A. The tensile shear strengths of novel compositions 11 and 12 would be acceptable for many structural applications. However, compositions 11 and 12 had a desirably improved cohesive failure mode while composition A had a mixed adhesive-cohesive failure mode. The cohesive failure mode would be preferred for many structural applications.

Peel Strength: ASTM D1876: Specimens: grit blasted mild steel (GBMS), substrate thickness: 0.032 in., bond thickness: as noted in Table, bond overlap: 1 in. x 9 in., testing rate: 10 in/min., test temperature: 20°C to 25°C.

Results are the average for 5 samples unless otherwise noted.

| Table 10 | | | |
|---|---|---|---|
| T-Peel Strength | A | 11 | 12 |
| Bond Thickness: 5 mils | | | |
| Mean, N/mm | 1.7 | 6.6 | 6.8 |
| StdDev, N/mm | 0.3 | 0.5 | 1.0 |
| Mean, lbs/in | 9.6 | 37.5 | 38.8 |
| StdDev, lbs/in | 1.4 | 3.0 | 5.9 |
| Failure Mode | adhesive | mixed | mixed |

| Table 11 | | | |
|---|---|---|---|
| T-Peel Strength | A | 11 | 12 |
| Bond Thickness: 10 mils | | | |
| Mean, N/mm | 2.9 | 6.2 | 6.7 |
| StdDev, N/mm | 0.4 | 0.6 | 0.7 |
| Mean, lbs/in | 16.3 | 35.5 | 38.3 |
| StdDev, lbs/in | 2.4 | 3.4 | 3.8 |
| Failure Mode | adhesive | mixed | mixed |

| Table 12 | | | |
|---|---|---|---|
| T-Peel Strength | A | 11 | 12 |
| Bond Thickness: 20 mils | | | |
| Mean, N/mm | 1.6 | 5.5 | 2.8 |
| StdDev, N/mm | 0.4 | 1.0 | 0.8 |
| Mean, lbs/in | 8.9 | 31.4 | 15.7 |
| StdDev, lbs/in | 2.0 | 5.4 | 4.5 |
| Failure Mode | adhesive | mixed | mixed |

T-Peel strength test measures the strength of an adhesive bond. It is the average load per unit width of bond line required to part bonded materials, where the angle of separation is 180 degrees.

Compositions 11 and 12 yielded substantial improvements in T-Peel strength compared to conventional composition A. The improved peel strength would be preferred for many structural applications. Compositions 11 and 12 had a desirably improved mixed adhesive-cohesive failure mode while composition A had a less desirable adhesive failure mode. The improved failure mode of compositions 11 and 12 would be preferred for many structural applications.

Wedge Impact: ISO 11343: Specimens: grit blasted mild steel (GBMS), substrate thickness: 0.75 mm, bond thickness: as noted in Table, bond overlap: 20 mm x 30 mm, testing rate: 2 m/sec, test temperature: 20°C to 25°C.

Results are the average for 5 samples unless otherwise noted.

| Table 13 | | | |
|---|---|---|---|
| Wedge Impact | A¹ | 11² | 12³ |
| Bond Thickness: 5 mils, 125 µm | | | |
| Mean, N/mm | 7.7 | 22.9 | 19.0 |
| StdDev, N/mm | 0.8 | 2.7 | 3.9 |
| Mean, lbs/in | 44.1 | 130.8 | 108.5 |
| StdDev, lbs/in | 4.4 | 15.6 | 22.5 |
| Failure Mode | adhesive | cohesive | cohesive |

| | | | |
|---|---|---|---|
| 1 average of 5 measurements 2 average of 3 measurements 3 average of 4 measurements | | | |

| Table 14 | | | |
|---|---|---|---|
| Wedge Impact | A¹ | 11² | 12³ |
| Bond Thickness: 10 mils, 250 µm | | | |
| Mean, N/mm | 6.5 | 21.1 | 21.8 |
| StdDev, N/mm | 0.5 | 1.0 | 2.1 |
| Mean, lbs/in | 36.9 | 120.3 | 116.4 |
| StdDev, lbs/in | 3.0 | 5.4 | 11.9 |
| Failure Mode | adhesive | cohesive | cohesive |

| | | | |
|---|---|---|---|
| 1 average of 4 measurements 2 average of 3 measurements 3 average of 4 measurements | | | |

| Table 15 | | | |
|---|---|---|---|
| Wedge Impact | A¹ | 11² | 12³ |
| Bond Thickness: 20 mils, 500 µm | | | |
| Mean, N/mm | 5.1 | 17.9 | 17.8 |
| StdDev, N/mm | 0.6 | 1.6 | 0.9 |
| Mean, lbs/in | 29.0 | 102.1 | 101.7 |
| StdDev, lbs/in | 3.3 | 9.4 | 5.1 |
| Failure Mode | adhesive | cohesive | cohesive |

| | | | |
|---|---|---|---|
| 1 average of 3 measurements 2 average of 5 measurements 3 average of 4 measurements | | | |

The wedge impact test measures a material's resistance to cleavage under impact conditions. It is an indication of the toughness of the material.

Compositions 11 and 12 yielded substantial improvements in wedge impact compared to conventional composition A. The improved toughness would be preferred for many structural applications. Compositions 11 and 12 had a desirably improved cohesive failure mode while conventional composition A had a less desirable adhesive failure mode. The improved cohesive failure mode would be preferred for many structural applications.

Side Impact: GM9751P: utilized an Instron Dynatup 92050HV drop tower with a tup geometry: Specimens: chromic acid etched Al-2024, and cold-rolled steel (CRS), substrate thickness: 0.065 in, bond thickness: as noted in Table, bond overlap: 1 in. x 1 in., testing rate: 5 m/sec., test temperature: 20°C to 25°C.

| Table 16 | | | |
|---|---|---|---|
| Side Impact, Joules | A | 11 | 12 |
| Bond Thickness: listed below in mils | | | |
| Al-2024, 5 mils | 4 | 14 | 15 |
| Al-2024, 10 mils | 4 | NR | 13 |
| Al-2024, 20 mils | 3 | NR | 18 |
| CRS, 5 mils | 11 | 22 | 15 |
| CRS, 10 mils | 10 | 21 | 17 |
| CRS, 20 mils | 8 | 18 | 22 |

| Table 17 | | | |
|---|---|---|---|
| Side Impact Failure Modes | A | 11 | 12 |
| Al-2024, 5 mils | adhesive | mixed/substrate | mixed |
| Al-2024, 10 mils | adhesive | Substrate | mixed |
| Al-2024, 20 mils | adhesive | Substrate | mixed |
| CRS, 5 mils | adhesive | Mixed | mixed |
| CRS, 10 mils | adhesive | Mixed | mixed |
| CRS, 20 mils | adhesive | Mixed | mixed |

| | | | |
|---|---|---|---|
| NR= value not reported due to substrate failure-the bond remained intact. | | | |

Impact strength measures the energy required to fracture a specimen subjected to shock loading. It is an indication of the toughness of the material.

Compositions 11 and 12 yielded substantial improvements in side impact compared to conventional composition A. The improved toughness would be preferred for many structural applications. Compositions 11 and 12 had a desirably improved mixed adhesive-cohesive failure mode-and in some instances the substrate failed before the adhesive bond failed-while conventional composition A had a less desirable adhesive failure mode. The improved cohesive failure mode would be preferred for many structural applications.

Bulk Fracture Toughness: ASTM D5045: testing rate: 0.004 in./min., test temperature: 20°C to 25°C; Results are the average for 5 samples unless otherwise noted.

Compositions A, 11 and 12 were prepared. Each mixed composition was made into a 4 inch by 6 inch by ½ inch sample and cured for 24 hours at room temperature followed by 4 hours at 65°C. The cured samples were machined into 4.5 inch by 1 inch by ½ inch test specimens. Each test specimen was notched with a 100 mil saw and cracked with a razor to 200-350 mils. Testing was conducted on a model 5500R Instron mechanical properties tester with a 200 lb load cell and a Wyoming short beam shear test fixture. Results are in Kq (PSI*in^{0.5} or MPa*m^{0.5}) and Gq (lb/in or J/m²).

| Table 18 | | | |
|---|---|---|---|
| | A | 11 | 12 |
| K_{1c}, PSI*in.^{0.5} | 1806.6 | 1614.3 | 1823.4 |
| K_{1c}, stddev, PSI*in^{0.5} | 273.2 | 281.5 | 277.9 |
| K_{1c}, MPa*m^{0.5} | 2.0 | 1.8 | 2.0 |
| K_{1c}, stddev, MPa*m^{0.5} | 0.3 | 0.3 | 0.3 |
| G_{1c}, lb/in | 11.9 | 10.5 | 14.7 |
| G_{1c}, stddev, lb/in | 3.0 | 1.6 | 4.5 |
| G_{1c}, J/m² | 2083.6 | 1833.9 | 2577.5 |
| G_{1c}, stddev, J/m² | 532.3 | 279.5 | 794.2 |

The Fracture Toughness test measures a material's resistance to crack propagation. This implies that the material has some internal mechanism to dissipate stress. Where Fracture Toughness is tested on a substrate, Bulk Fracture Toughness is tested on the material itself.

Compositions 11 and 12 yielded comparable K_{1c} values compared to conventional composition A. K_{1c} is indicative of a material's ability to distribute stress in the vicinity of flaws under applied loads. Composition 11 and conventional composition A yielded comparable G_{1c} values, whereas composition 12 yielded a higher G_{1c}. G_{1c} is indicative of a material's ability to store energy in the vicinity of flaws under applied loads. The higher the K_{1c} and G_{1c} value, the tougher the material.

The following Table summarizes failure modes for compositions A, 11 and 12 under a variety of tests on a variety of substrates. Compositions 11 and 12 had a desirably improved cohesive failure mode while conventional composition A had a less desirable adhesive failure mode.

| Table 19 | | | |
|---|---|---|---|
| | A | 11 | 12 |
| Tensile Lap Shear | | | |
| GBMS | mixed | Cohesive | cohesive |
| Al-2024, chromic acid etch | mixed | Cohesive | cohesive |
| Al-2024, IPA wiped | adhesive | Cohesive | cohesive |
| Al-2024, grit blasted | mixed | Cohesive | cohesive |
| T-Peel Strength | adhesive | Mixed | mixed |
| Wedge Impact | adhesive | Cohesive | cohesive |
| Side Impact | | | |
| Al-2024, chromic acid etch | adhesive | mixed/substrate | mixed |
| CRS | adhesive | Mixed | mixed |

As shown in this Table the cured product of novel compositions 11 and 12 show desirably improved failure modes in almost every test. The improved failure mode would be preferred for many structural applications.

While preferred embodiments have been set forth for purposes of illustration, the foregoing description should not be deemed a limitation of the disclosure herein. Accordingly, various modifications, adaptations and alternatives may occur to one skilled in the art without departing from the spirit and scope of the present disclosure.

## Claims

1. A two part curable adhesive composition comprising:
a resin part comprising an aromatic epoxy resin;
a curing agent part separate from the resin part and comprising an aliphatic amine;
a first core-shell rubber particle in one of the resin part or the curing agent part;
a second acrylate or methacrylate comprising core-shell particle different than the first particle in one of the resin part or the curing agent part; and
an auxiliary impact modifier/toughening agent in one of the resin part or the curing agent part.

2. The two part adhesive composition of claim 1 wherein the auxiliary impact modifier/toughening agent is an epoxy resin/linear amine terminated polyether reaction product.

3. The two part adhesive composition of any of claims 1 to 2 wherein the auxiliary impact modifier/toughening agent is homogeneously mixed in the resin part and comprises an epoxy resin/linear polyoxypropyleneamine reaction product containing reactive epoxide groups.

4. The two part adhesive composition of any of claims 1 to 3 wherein the resin part is a homogeneous mixture comprising aromatic epoxy resin; the first core-shell rubber particle; the second acrylate or methacrylate comprising core-shell particle and the auxiliary impact modifier/toughening agent comprising an epoxy resin/linear polyoxypropyleneamine reaction product containing reactive epoxide groups.

5. The two part adhesive composition of any of claims 1 to 4 wherein the curing agent part comprises the mixed product of a reactive polyamide resin and an aliphatic polyamine.

6. The two part adhesive composition of any of claims 1 to 5 further comprising a methacrylate-butadiene-styrene core-shell particle in one of the resin part or the curing agent part.

7. The two part adhesive composition of any of claims 1 to 6 wherein the resin part is a homogeneous mixture of the aromatic epoxy resin; the first core-shell rubber particle; the second acrylate or methacrylate comprising core-shell particle; a third methacrylate-butadiene-styrene core-shell particle different than the first and second particles; and the auxiliary impact modifier/toughening agent, the auxiliary modifier/toughening agent comprising an epoxy resin/linear polyoxypropyleneamine reaction product containing reactive epoxide groups.

8. A package for the two part adhesive composition of claim 1, including a first container holding the resin part comprising 20% to 75% by weight of mixed two part adhesive of epoxy resin; and a second container holding 3% to 60% by weight of mixed two part adhesive of the curing agent part comprising an amine; one of the resin part or the curing agent part comprising 1 % to 40 % by weight of mixed two part adhesive of the first core-shell rubber particle; one of the resin part or the curing agent part comprising 1 % to 40 % by weight of mixed two part adhesive of the acrylate or methacrylate comprising core-shell particle different than the first particle; one of the resin part or the curing agent part comprising 1 % to 40 % by weight of mixed two part adhesive of the auxiliary impact modifier/toughening agent; wherein a mixture of the resin part and the curing agent part will have a working life of no more than 8 hours.

9. The curable, two part adhesive package of claim 8 wherein the curing agent part further comprises a reactive polyamide resin.

10. A method of using the two part curable adhesive composition of one or more of claims 1 to 7 for making a bond, comprising:
storing the resin part in a first container and the curing agent part in a second container;
mixing the resin part and the curing agent part to form a mixed, curable adhesive comprising 20% to 75% by weight of mixed adhesive of epoxy resin; 3% to 60% by weight of mixed adhesive of curing agent; 1% to 40% by weight of mixed adhesive of a first core-shell rubber particle; 1% to 40% by weight of mixed adhesive of an acrylate or methacrylate comprising core-shell particle different than the first particle; 1% to 40% by weight of mixed adhesive of an auxiliary impact modifier/toughening agent, wherein the mixed curable adhesive will have a working life of no more than 8 hours;
dispensing the mixed, curable adhesive onto a surface to be bonded; and
curing the mixed, curable adhesive in contact with the surface to form the bond.

11. The method of claim 10 wherein the bond has a mixed cohesive/adhesive failure mode or a cohesive failure mode.

12. The method of any of claims 10 to 11 wherein the bond has a wedge impact cohesive failure mode.

13. The method of any of claims 10 to 12 wherein the mixed, curable adhesive further comprises 1% to 40% by weight of mixed adhesive of a third core-shell particle having a polybutadiene copolymer core and a polymethylmethacrylate shell different than the first and second particles.

## Patentansprüche

1. Zweiteilige härtbare Klebstoffzusammensetzung, umfassend:
einen Harzteil, ein aromatisches Epoxidharz umfassend;
einen Härtungsmittelteil, der von dem Harzteil getrennt ist und ein aliphatisches Amin umfasst;
ein erstes Kern-Schalen-Gummi-Partikel in einem von dem Harzteil und dem Härtungsmittelteil;
ein zweites Acrylat oder Methacrylat, umfassend ein von dem ersten Partikel verschiedenes Kern-Schalen-Partikel, in einem von dem Harzteil und dem Härtungsmittelteil; und
einen zusätzlichen Schlagzähmodifizierer/ein zusätzliches Verstärkungsmittel in einem von dem Harzteil und dem Härtungsmittelteil.

2. Zweiteilige Klebstoffzusammensetzung nach Anspruch 1, wobei der/das zusätzliche SchlagzähmodifiziererNerstärkungsmittel ein Epoxidharz/lineares Amin-terminiertes Polyether-Reaktionsprodukt ist.

3. Zweiteilige Klebstoffzusammensetzung nach einem der Ansprüche 1 bis 2, wobei der/das zusätzliche SchlagzähmodifiziererNerstärkungsmittel im Harzteil homogen vermischt ist und ein Epoxidharz/lineares Polyoxypropylenamin-Reaktionsprodukt, das reaktive Epoxidgruppen enthält, umfasst.

4. Zweiteilige Klebstoffzusammensetzung nach einem der Ansprüche 1 bis 3, wobei der Harzteil eine homogene Mischung ist, umfassend: ein aromatisches Epoxidharz; das erste Kern-Schalen-Gummi-Partikel; das zweite Acrylat oder Methacrylat, das ein Kern-Schalen-Partikel umfasst, und den zusätzlichen Schlagzähmodifizierer/das zusätzliche Verstärkungsmittel, umfassend ein Epoxidharz/lineares Polyoxypropylenamin-Reaktionsprodukt, das reaktive Epoxidgruppen enthält.

5. Zweiteilige Klebstoffzusammensetzung nach einem der Ansprüche 1 bis 4, wobei der Härtungsmittelteil das gemischte Produkt aus einem reaktiven Polyamidharz und einem aliphatischen Polyamin umfasst.

6. Zweiteilige Klebstoffzusammensetzung nach einem der Ansprüche 1 bis 5, ferner umfassend ein Methacrylatbutadienstyrol-Kern-Schalen-Partikel in einem von dem Harzteil und dem Härtungsmittelteil.

7. Zweiteilige Klebstoffzusammensetzung nach einem der Ansprüche 1 bis 6, wobei der Harzteil ist: eine homogene Mischung aus dem aromatischen Epoxidharz; dem ersten Kern-Schalen-Gummi-Partikel; dem zweiten Acrylat oder Methacrylat, das ein Kern-Schalen-Partikel umfasst; einem von dem ersten und dem zweiten Partikel verschiedenen dritten Methacrylatbutadienstyrol-Kern-Schalen-Partikel; und dem zusätzlichen Schlagzähmodifizierer/Verstärkungsmittel, wobei der/das zusätzliche SchlagzähmodifiziererNerstärkungsmittel ein Epoxidharz/lineares Polyoxypropylenamin-Reaktionsprodukt, das reaktive Epoxidgruppen enthält, umfasst.

8. Verpackung für die zweiteilige Klebstoffzusammensetzung nach Anspruch 1, die enthält: einen ersten Behälter, der den Harzteil, umfassend 20 Gew.-% bis 75 Gew.-% von gemischtem zweiteiligem Klebstoff von Epoxidharz, hält, und einen zweiten Behälter, der 3 Gew.-% bis 60 Gew.-% von gemischtem zweiteiligem Klebstoff des Härtungsmittelteils, ein Amin umfassend, hält; wobei einer des Harzteils und des Härtungsmittelteils 1 Gew.-% bis 40 Gew.-% von gemischtem zweiteiligem Klebstoff des ersten Kern-Schalen-Gummi-Partikels umfasst; wobei einer des Harzteils und des Härtungsmittelteils 1 Gew.-% bis 40 Gew.-% von gemischtem zweiteiligem Klebstoff des Acrylats oder des Methacrylats, umfassend ein von dem ersten Partikel verschiedenes Kern-Schalen-Partikel, umfasst; wobei einer des Harzteils und des Härtungsmittelteils 1 Gew.-% bis 40 Gew.-% von gemischtem zweiteiligem Klebstoff des zusätzlichen Schlagzähmodifizierers/Verstärkungsmittels umfasst; wobei eine Mischung des Harzteils und des Härtungsmittelteils eine Lebensdauer von nicht mehr als 8 Stunden aufweist.

9. Härtbare zweiteilige Klebstoffverpackung nach Anspruch 8, wobei der Härtungsmittelteil ferner ein reaktives Polyamidharz umfasst.

10. Verfahren zum Verwenden der zweiteiligen härtbaren Klebstoffzusammensetzung nach einem oder mehreren der Ansprüche 1 bis 7 zum Herstellen einer Bindung, umfassend:
Lagern des Harzteils in einem ersten Behälter und des Härtungsmittelteils in einem zweiten Behälter;
Mischen des Harzteils und des Härtungsmittelteils zum Ausbilden eines gemischten härtbaren Klebstoffs, umfassend 20 Gew.-% bis 75 Gew.-% von gemischtem Klebstoff aus Epoxidharz; 3 Gew.-% bis 60 Gew.-% von gemischtem Klebstoff aus Härtungsmittel; 1 Gew.-% bis 40 Gew.-% von gemischtem Klebstoff aus einem ersten Kern-Schalen-Gummi-Partikel; 1 Gew.-% bis 40 Gew.-% von gemischtem Klebstoff aus einem Acrylat oder Methacrylat, umfassend ein von dem ersten Partikel verschiedenes Kern-Schalen-Partikel; 1 Gew.-% bis 40 Gew.-% von gemischtem Klebstoff aus einem zusätzlichen Schlagzähmodifizierer/Verstärkungsmittel, wobei der gemischte härtbare Klebstoff eine Lebensdauer von nicht mehr als 8 Stunden aufweist;
Ausgeben des gemischten härtbaren Klebstoffs auf eine zu bindende Oberfläche; und
Aushärten des gemischten härtbaren Klebstoffs in Berührung mit der Oberfläche zum Ausbilden der Bindung.

11. Verfahren nach Anspruch 10, wobei die Bindung ein gemischtes Kohäsions-/Adhäsionsbruchbild oder ein Kohäsionsbruchbild aufweist.

12. Verfahren nach einem der Ansprüche 10 bis 11, wobei die Bindung ein Schlagkeil-Kohäsionsbruchbild aufweist.

13. Verfahren nach einem der Ansprüche 10 bis 12, wobei der gemischte härtbare Klebstoff ferner 1 Gew.-% bis 40 Gew.-% von gemischtem Klebstoff aus einem dritten Kern-Schalen-Partikel mit Polybutadien-Copolymerkern und einer von der des ersten und des zweiten Partikels verschiedenen Polymethylmethacrylat-Schale umfasst.

## Revendications

1. Composition adhésive durcissable en deux parties comprenant :
une partie résine comprenant une résine époxy aromatique ;
une partie agent de durcissement séparée de la partie résine et comprenant une amine aliphatique ;
une première particule de caoutchouc de type noyau-enveloppe dans une partie parmi la partie résine et la partie agent de durcissement ;
une deuxième particule de type noyau-enveloppe comprenant de l'acrylate ou du méthacrylate, différente de la première particule dans une partie parmi la partie résine et la partie agent de durcissement ; et
un agent de modification de la résistance aux chocs / agent de renforcement auxiliaire dans une partie parmi la partie résine et la partie agent de durcissement.

2. Composition adhésive en deux parties selon la revendication 1, dans laquelle l'agent de modification de la résistance aux chocs / agent de renforcement auxiliaire est un produit de réaction de type polyéther à terminaison amine époxy / amine linéaire.

3. Composition adhésive en deux parties selon l'une quelconque des revendications 1 à 2, dans laquelle l'agent de modification de la résistance aux chocs / agent de renforcement auxiliaire est mélangé de manière homogène dans la partie résine et comprend un produit de réaction résine époxy / polyoxypropylène linéaire contenant des groupes époxydes réactifs.

4. Composition adhésive en deux parties selon l'une quelconque des revendications 1 à 3, dans laquelle la partie résine est un mélange homogène comprenant une résine époxy aromatique ; la première particule de caoutchouc de type noyau-enveloppe ; la deuxième partie de type noyau-enveloppe comprenant de l'acrylate ou du méthacrylate et l'agent de modification de la résistance aux chocs / agent de renforcement auxiliaire comprenant un produit de réaction résine époxy / polyoxypropylène-amine linéaire contenant des groupes époxydes réactifs.

5. Composition adhésive en deux parties selon l'une quelconque des revendications 1 à 4, dans laquelle la partie agent de durcissement comprend le produit du mélange d'une résine polyamide réactive et d'une polyamine aliphatique.

6. Composition adhésive en deux parties selon l'une quelconque des revendications 1 à 5, comprenant en outre une particule de type noyau-enveloppe de méthacrylate-butadiène-styrène dans une partie parmi la partie résine et la partie agent de durcissement.

7. Composition adhésive en deux parties selon l'une quelconque des revendications 1 à 6, dans laquelle la partie résine est un mélange homogène de la résine époxy aromatique ; de la première particule de caoutchouc de type noyau-enveloppe ; de la deuxième partie de type noyau-enveloppe comprenant de l'acrylate ou du méthacrylate ; d'une troisième particule de type noyau-enveloppe de méthacrylate-butadiène-styrène différente des première et deuxième particules ; et de l'agent de modification de la résistance aux chocs / agent de renforcement auxiliaire, l'agent de modification de la résistance aux chocs / agent de renforcement auxiliaire comprenant un produit de réaction résine époxy / polyoxypropylène-amine linéaire contenant des groupes époxydes réactifs.

8. Emballage pour la composition adhésive en deux parties selon la revendication 1, comprenant un premier récipient renfermant la partie résine, comprenant de 20 % à 75 % en poids d'adhésif en deux parties mélangé de résine époxy ; et un second récipient renfermant de 3 % à 60 % en poids d'adhésif en deux parties mélangé de la partie agent de durcissement comprenant une amine ; une partie parmi la partie résine et la partie agent de durcissement comprenant de 1 % à 40 % en poids d'adhésif en deux parties mélangé de la première particule de caoutchouc de type noyau-enveloppe ; une partie parmi la partie résine et la partie agent de durcissement comprenant de 1 % à 40 % en poids d'adhésif en deux parties mélangé d'acrylate ou de méthacrylate comprenant une particule de type noyau-enveloppe différente de la première particule ; une partie parmi la partie résine ou la partie agent de durcissement comprenant de 1 % à 40 % en poids d'adhésif en deux parties mélangé de l'agent de modification de la résistance aux chocs / agent de renforcement auxiliaire ; dans lequel un mélange de la partie résine et de la partie agent de durcissement aura une durée de vie n'excédant pas 8 heures.

9. Emballage adhésif durcissable en deux parties selon la revendication 8, dans lequel la partie agent de durcissement comprend en outre une résine polyamide réactive.

10. Procédé d'utilisation de la composition adhésive durcissable en deux parties selon une ou plusieurs des revendications 1 à 7 pour la fabrication d'une liaison, consistant à :
stocker la partie résine dans un premier récipient et la partie agent de durcissement dans un second récipient ;
mélanger la partie résine et la partie agent de durcissement pour former un adhésif durcissable mélangé comprenant de 20 % à 75 % en poids d'un adhésif mélangé de résine époxy ; de 3 % à 60 % en poids d'adhésif mélangé d'agent de durcissement ; de 1 % à 40 % en poids d'adhésif mélangé d'une première particule de caoutchouc de type noyau-enveloppe ; de 1 % à 40 % en poids d'adhésif mélangé d'un acrylate ou méthacrylate comprenant une particule de type noyau-enveloppe différente de la première particule ; de 1 % à 40 % en poids d'adhésif mélangé d'un agent de modification de la résistance aux chocs / agent de renforcement, dans lequel l'adhésif durcissable mélangé aura une durée de vie n'excédant pas 8 heures ;
distribuer l'adhésif durcissable mélangé sur une surface à coller ; et
faire durcir l'adhésif durcissable mélangé en contact avec la surface pour former la liaison.

11. Procédé selon la revendication 10, dans lequel la liaison a un mode de rupture mixte cohésive / adhésive ou un mode de rupture cohésive.

12. Procédé selon l'une quelconque des revendications 10 à 11, dans lequel la liaison a un mode de rupture cohésive à impact au coin.

13. Procédé selon l'une quelconque des revendications 10 à 12, dans lequel l'adhésif durcissable mélangé comprend en outre de 1 % à 40 % en poids d'adhésif mélangé d'une troisième particule de type noyau-enveloppe ayant un noyau de copolymère de polybutadiène et une enveloppe de polyméthacrylate de méthyle différents des première et deuxième particules.
